(19) Europäisches Patentamt
European Patent Office
Office européen des brevets

(11) Veröffentlichungsnummer : **0 156 270**
**B1**

(12) # EUROPÄISCHE PATENTSCHRIFT

(45) Veröffentlichungstag der Patentschrift : **16.06.87**

(51) Int. Cl.⁴ : **E 21 B 43/22**, B 01 D 17/04

(21) Anmeldenummer : **85103043.7**

(22) Anmeldetag : **16.03.85**

(54) **An ihrer Oberfläche durch hydrophile und hydrophobe Gruppen modifizierte Teilchen.**

(30) Priorität : **30.03.84 DE 3411759**

(43) Veröffentlichungstag der Anmeldung : **02.10.85 Patentblatt 85/40**

(45) Bekanntmachung des Hinweises auf die Patenterteilung : **16.06.87 Patentblatt 87/25**

(84) Benannte Vertragsstaaten : **AT BE CH DE FR GB IT LI LU NL SE**

(56) Entgegenhaltungen :
**FR-A- 1 452 415**
**FR-A- 2 216 019**
**GB-A- 2 038 300**
**US-A- 3 268 456**
**US-A- 4 199 447**

(73) Patentinhaber : **Th. Goldschmidt AG**
**Goldschmidtstrasse 100 Postfach 101461**
**D-4300 Essen 1 (DE)**

(72) Erfinder : **Grüning, Burghard, Dr.**
**Waldsaum 11**
**D-4300 Essen (DE)**
Erfinder : **Holtschmidt, Ulrich, Dr.**
**Veddershang 11**
**D-4300 Essen (DE)**
Erfinder : **Koerner, Götz, Dr.**
**Kantorie 126**
**D-4300 Essen (DE)**
Erfinder : **Rossmy, Gerd, Dr.**
**Im Hadkamp 18**
**D-4358 Haltern-Lavesum (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft in organischen Lösungsmitteln und Wasser unlösliche, an ihrer Oberfläche durch hydrophile und hydrophobe Gruppen modifizierte Teilchen einer Teilchengröße < 100 µm, Verfahren zur Modifizierung dieser Teilchen sowie die Verwendung der modifizierten Teilchen als grenzflächenaktive Produkte, insbesondere zum Stabilisieren oder Destabilisieren von Emulsionen, Schäumen sowie zur tertiären Erdölförderung.

Das hydrophile oder hydrophobe Verhalten eines Festkörpers wird im wesentlichen durch die an seiner Oberfläche befindlichen Gruppen bestimmt. So sind z. B. Teilchen, welche an der Oberfläche Hydroxylgruppen aufweisen, im Regelfall hydrophil. Ein solches Verhalten zeigt z. B. feinteilige, pyrolytisch gewonnene Kieselsäure. Befinden sich an der Oberfläche des Teilchens aber z. B. Kohlenwasserstoffgruppen, wie Alkylgruppen, insbesondere längerkettige Alkylgruppen, weisen die Teilchen hydrophobe Eigenschaften auf.

Es ist nun seit langem bekannt, daß man den hydrophilen oder hydrophonen Charakter anorganischer oder organischer Teilchen beeinflussen kann. Dies kann durch Adsorption von Substanzen an der Oberfläche eines Teilchens, insbesondere aber durch chemische Reaktionen mit reaktiven Gruppen erfolgen, welche sich an der Oberfläche des Teilchens befinden. Zu diesem Stand der Technik gibt es eine umfangreiche Literatur.

So ist z. B. in der DE-OS 23 13 073 ein Verfahren zur chemischen Modifizierung der Oberflächen anorganischer, Hydroxylgruppen enthaltender Festkörper mit dem Kennzeichen beschrieben, daß an diese Oberflächen Alkylketten chemisch gebunden werden, die reaktive Heteroatome tragen. Dabei können diese reaktiven Heteroatome durch chemisch funktionelle Gruppen ersetzt werden. Ein typisches Beispiel einer solchen Modifizierungsreaktion ist die Umsetzung der oberflächlich gebundenen Hydroxylgruppen des Festkörpers mit Brommethylmethyldichlorsilan, wobei durch eine weitere Reaktion das Bromatom durch einen $SO_3H$—, $NH_2$—, COOH— oder durch einen Polyethylenglykolrest ersetzt wird. Als Festkörper können u. a. Siliciumdioxid (Silicagel), Aluminiumoxid, Titandioxid, Zirkoniumdioxid und andere anorganische Träger, wie Glaskugeln und Sand verwendet werden. Die chemisch modifizierten Festkorper werden als stationäre Phase in einem Trennsystem, z. B. in der Chromatographie oder als Katalysator, verwendet. Es ist einleuchtend, daß durch, eine derartige Modifizierung der Oberfläche die Eignung solcher modifizierter Festkörper als stationäre Phase in der Chromatographie wesentlich beeinflußt werden kann, da das physikalische und chemische Verhalten des modifizierten Festkörpers gegenüber der mobilen Phase wesentlich durch die Eigenschaften seiner Oberfläche bestimmt wird. Durch die Art der Modifizierungsreaktion und im Hinblick auf die beabsichtigte Verwendung ist davon auszugehen, daß die gesamte Oberfläche der Teilchen an der Modifizierungsreaktion teilnimmt. Wird das Modifizierungsmittel in einem Unterschuß verwendet, so daß nicht alle reaktiven Gruppen, die sich an der Oberfläche der Teilchen befinden, modifiziert werden können, ist anzunehmen, daß die Verteilung der modifizierten Gruppen auf der Oberfläche nach statistischen Gesetzen erfolgt, so daß sich das modifizierte Teilchen an jeder Stelle seiner Oberfläche gleich hydrophil oder hydrophob verhält.

Gegenstand der DE-OS 21 07 082 ist ein oberflächenbehandeltes, pulverisiertes Siliciumdioxid mit einer Oberfläche von mindestens 10 $m^2/g$, welches dadurch gekennzeichnet ist, daß es einen Hydrophobizitätsgrad, gemessen durch den Methanoltitrationstest, von 5 bis 35 aufweist. Der Methanoltitrationstest, dessen Ergebnis auch als Methanolzahl bezeichnet wird, gibt eine häufig verwendete bestimmte Größe zur Ermittlung des Grades der Hydrophobie an. Die Ausführung des Testes kann in der Weise erfolgen, daß man 0,2 g des zu prüfenden Pulvers in 50 ml Wasser, das sich in einem konischen 250-ml-Kolben befindet, einbringt. Das Pulver wird, wenn es eine hydrophobe Oberfläche aufweist, durch das Wasser nicht benetzt und schwimmt auf der Oberfläche des Wassers. Nun wird aus einer Bürette langsam Methanol zugegeben, bis das gesamte zu prüfende Pulver benetzt ist. Als Endpunkt gilt der Punkt beim Zusatz des Methanols, bei dem das gesamte Pulver in der Flüssigkeit suspendiert ist. Die Methanolzahl ist dann der Prozentsatz Methanol im Flüssigkeitsgemisch aus Methanol und Wasser bei Erreichen des Endpunktes.

In der vorgenannten DE-OS 21 07 082 erfolgt die Hydrophobierung des Siliciumdioxidpulvers dadurch, daß man die Oberfläche mit einem Silan behandelt, welches sowohl in bezug auf die OH-Gruppen der Kieselsaure reaktive Gruppen als auch hydrophobe Grupper enthält. Durch die Reaktion der an der Oberfläche des Siliciumdioxids befindlichen Hydroxylgruppen mit den reaktiven Gruppen des Silans werden die Teilchen mit einer Schicht überzogen, auf der sich nach außen hin die hydrophoben Gruppen des Silans befinden. Beispiel eines solchen reaktiven Silans ist Methyltriethoxysilan. Eine Abstufung der Hydrophobie solcher Teilchen kann dadurch erfolgen, daß man zur Modifizierung siliciumorganische Verbindungen verwendet, welche als Substituenten auch hydrophile Gruppen, wie z. B. Oxyalkylengruppen, aufweisen. Auch in dieser Offenlegungsschrift wird davon gesprochen, daß die Verteilung solcher hydrophilen Gruppen innerhalb der hydrophoben Gruppen willkürlich erfolgt, d. h., daß die Belegung der Oberfläche nach statistischen Gesetzen verläuft, so daß die Wahrscheinlichkeit, auf der Oberfläche eines modifizierten Teilchens eine hydrophile bzw. hydrophobe Gruppe anzutreffen, in Abhängigkeit von der Konzentration dieser Gruppen immer gleich ist. Das oberflächenbehandelte Siliciumdioxid soll nach der Lehre dieser Offenlegungsschrift die Verträglichkeit des Siliciumdioxids in

Feuerlöschmitteln erhöhen.

In der DE-OS 31 32 370 ist ein Verfahren zur tertiären Erdölförderung mittels Tensid-Fluten beschrieben, bei dem der tensidhaltigen, wäßrigen Flüssigkeit eine wirksame Menge eines oberflächenmodifizierten Siliciumdioxids zugesetzt wird. Die Modifizierung des Siliciumdioxids erfolgt bevorzugt mit einem $\alpha,\omega$-Polysiloxandiol. Die Kieselsäure hat dabei eine Teilchengröße von 0,005 µm bis 2 µm. Es wird in einer Menge von 10 bis 1 000 ppm der Tensidlösung zugesetzt. In der DE-OS wird ausgeführt, daß die « Siliciumdioxid-Dialkylsiloxan-Verbindung » hochgrenzflächenaktiv sei, weil sie aus einem hydrophilen und einem hydrophoben Anteil bestünde. Da nur die Oberflächenreaktion mit Polysiloxandiol beschrieben ist, muß unterstellt werden, daß die Anmelderin den angegebenen hydrophilen Anteil in den verbliebenen nichtmodifizierten Hydroxylgruppen des feinteiligen Siliciumdioxids erblickt. Wie die Reaktion des Siliciumdioxidteilchens mit dem Polysiloxandiol erfolgt, ist in der DE-OS 31 32 370 nicht angegeben. Man muß jedoch entsprechend dem Stand der Technik davon ausgehen, daß man das Siloxandiol auf die Oberfläche der Siliciumdioxidteilchen einwirken läßt, wodurch es vermutlich zu einer Kondensationsreaktion kommt, die auf allen Bezirken der Teilchen gleichmäßig abläuft.

Die DE-OS 29 46 727 betrifft ein zur Trennung von Wasser-Öl-Gemischen dienendes Produkt. Dieses wird dadurch hergestellt, daß man einen anorganischen Feststoff mit oberflächlichen Hydroxylgruppen mit einem Silan umsetzt, welches Gruppen aufweist, die mit den Hydroxylgruppen des Festkörpers reagieren können, wie z. B. Halogen- oder Alkoxygruppen sowie einen halogenierten Kohlenwasserstoffrest, der dann in einer zweiten Verfahrensstufe in Reaktion mit einem N-substituierten Imid einer alkenylsubstituierten Dicarbonsäure tritt. Nach dieser Modifizierungsreaktion befindet sich an der Oberfläche des Festkörperteilchens ein relativ hochmolekularer Rest, welcher sowohl hydrophile NH-Gruppen wie auch hydrophobe Alkenylgruppen aufweist. Der anorganische Feststoff kann Siliciumdioxid, Aluminiumoxid, Titandioxid, Zirkoniumdioxid, Glas, Sepiolith oder ein zeolithisches Molekularsieb sein. Bildet man aus derart modifizierten Teilchen ein Filterbett und leitet man mit Öl verunreinigtes Wasser oder mit Wasser verunreinigtes Öl durch dieses Bett, so wird die Verunreinigung aus der Trägerphase abgetrennt.

Es wird ferner die DE-PS 27 43 682 zum Stand der Technik genannt, welche die Behandlung oxidischer oder silicatischer Teilchen mit speziellen Organosilanen betrifft. Diese Organosilane enthalten einen aus Oxyalkylengruppen bestehenden Substituenten sowie hydrolysierbare Gruppen, welche die Verknüpfung des Silans mit den Festkörperteilchen bewirken sollen. Die so modifizierten Teilchen zeigen erhöhte Dispergierbarkeit und sollen als Füllstoffe für wärmehärtende Polyestermassen verwendet werden.

Allen diesen modifizierten Teilchen des Standes der Technik ist gemeinsam, daß die Hydrophilie oder Hydrophobie der Oberfläche gezielt beeinflußt worden ist, um den Teilchen bestimmte erwünschte anwendungstechnische Eigenschaften zu vermitteln. Diese anwendungstechnischen Eigenschaften beruhen insbesondere auf der besseren Verträglichkeit und Benetzbarkeit der Teilchen mit dem bzw. durch das Medium, in dem sich die Teilchen befinden. Die aus dem Stand der Technik bekannten, in ihren Oberflächeneigenschaften modifizierten Festkörper weisen die hydrophoben oder hydrophilen Gruppen, die sich an der Teilchenoberfläche befinden, in gleichmäßiger, statistischer Verteilung auf. Es gelingt somit nur, ein hydrophiles Teilchen mehr oder weniger ausgeprägt zu hydrophobieren. Dies zeigt sich in der Verteilung der Teilchen in zwei miteinander nicht mischbaren Flüssigkeiten : Überschichtet man Wasser als polare Flüssigkeit mit Hexan als Beispiel einer unpolaren Flüssigkeit und gibt man pyrogene Kieselsäure mit unbehandelter Oberfläche dazu, verteilt sich die unbehandelte pyrogene Kieselsäure aufgrund der Anwesenheit von Hydroxylgruppen an ihrer Oberfläche fast ausschließlich in dem Wasser. Hydrophobiert man die Kieselsäure nach einem der aus dem Stand der Technik bekannten Verfahren, so daß praktisch alle Hydroxylgruppen modifiziert und gegebenenfalls verbleibende Hydroxylgruppen sterisch so abgeschirmt sind, daß ihr Beitrag zu den Oberflächeneigenschaften vernachlässigbar ist, verteilt sich eine solche hydrophobierte Kieselsäure praktisch ausschließlich in der Hexan-Phase. Hydrophobiert man jedoch pyrogene Kieselsäure nur teilweise und in unterschiedlichem Ausmaß, wobei der Grad der Hydrophobie z. B. durch die Methanolzahl bestimmt werden kann, erhält man Verteilungen zwischen beiden Phasen, die mit dem Grad der Hydrophobierung korrelieren.

Der Erfindung liegt nun die Aufgabe zugrunde, feinteilige, in organischen Lösungsmitteln und in Wasser unlösliche Festkörper einer Teilchengröße von $< 100$ µm mit dem Ziel zu modifizieren, ihr Verhalten und ihre Eigenschaften an Phasengrenzflächen zu beeinflussen.

Das bedeutet, daß die Oberfläche der Festkörperteilchen nicht nur hinsichtlich ihrer Affinität gegenüber polaren und unpolaren Lösungsmitteln verändert werden soll, sondern, daß die Festkörperteilchen insbesondere an Phasengrenzflächen Wirkungen erzielen, wie sie in ähnlicher Weise von Tensiden bekannt sind. Jedoch sind die modifizierten Festkörper im Gegensatz zu Tensiden im System unlöslich und können deshalb in einfacher Weise durch Filtrieren, Zentrifugieren oder ähnliche Maßnahmen aus dem System entfernt werden. Hierdurch wird eine neue Klasse von quasigrenzflächenaktiven Produkten zur Verfugung gestellt, welche vielfältige gewerbliche Anwendbarkeit zeigen sollten.

Diese der Erfindung zugrunde liegende Aufgabe kann in überraschender Weise bei in organischen Lösungsmitteln und Wasser unlöslichen, an ihrer Oberfläche durch hydrophile und hydrophobe Gruppen modifizierten Teilchen einer Teilchengröße $< 100$ µm dadurch gelöst werden, daß die hydrophilen und hydrophoben Gruppen auf der Oberfläche der modifizierten Teilchen anisotrop verteilt sind.

Das Wesen der Erfindung besteht somit darin, daß im Gegensatz zum Stand der Technik die hydrophilen und hydrophoben Gruppen auf der Oberfläche der Teilchen nicht nach statistischen Gesetzen verteilt sind, sondern vielmehr voneinander getrennte Bereiche unterschiedlicher Hydrophilie bzw. Hydrophobie aufweisen. Die hydrophilen und hydrophoben Gruppen liegen somit in voneinander getrennten Domänen vor. Dabei können die einzelnen Domänen in einer Fläche angeordnet sein und aneinander angrenzen. Sie können vorzugsweise aber bei schichtförmigen Teilchen getrennt jeweils auf einer Oberfläche angeordnet sein.

Von den löslichen tensidischen Verbindungen ist es bekannt, daß sie, um grenzflächenaktiv zu sein, hydrophile und hydrophobe Gruppen im gleichen Molekül enthalten müssen. Man kann deshalb das Wesen der Erfindung auch darin sehen, daß die Anordnung der hydrophilen und hydrophoben Gruppen aus dem molekularen Bereich der Tenside in den Bereich von Festkörperteilchen einer Größe von etwa 10 nm bis 100 µm übertragen wird.

Es war überraschend, daß auch diese, verglichen mit dem Molekularbereich, verhältnismäßig groben, unlöslichen Teilchen bei anisotroper Verteilung der hydrophilen und hydrophoben Gruppen in ausgeprägter Form Eigenschaften zeigen, die grenzflächenaktiven Verbindungen eigen sind, wie z. B. die Adsorption an einer Öl/Wasser-Phasengrenzfläche, wobei aber die anisotrop modifizierten Festkörper im Gegensatz zu den löslichen Tensiden zur Herabsetzung der Grenzflächenspannung nicht geeignet sind.

Die erfindungsgemäßen anisotrop hydrophil und hydrophob modifizierten Teilchen eignen sich besonders zur Herstellung verhältnismäßig grober, aber dennoch über Monate stabiler Ermulsionen. Sie können zur Stabilisierung von Schaumen verwendet werden. Sie eignen sich zum Einsatz für die Entölung von Lagerstätten bei der tertiären Erdölförderung. Dabei ist es dem Fachmann verständlich, daß je nach der Balance der hydrophilen und hydrophoben Gruppen die Eigenschaften der erfindungsgemäßen Festkörper in Gemischen von polaren und unpolaren Systemen unterschiedlich sind. Dieses hydrophile/hydrophobe Gleichgewicht wird bei Tensiden, also löslichen Verbindungen, häufig durch den sogenannten HLB-Wert ausgedrückt. Wenn auch die erfindungsgemäßen Teilchen unlöslich sind, läßt sich aber doch im Vergleich mit löslichen Tensiden eine gewisse Ähnlichkeit in der Abhängigkeit ihres Verhaltens von ihrer Hydrophil/Hydrophob-Balance feststellen.

Die Teilchen können anorganischer oder organischer Natur sein. Bevorzugt sind anorganische Feststoffe, insbesondere Kieselsäure in feinverteilter, insbesondere pyrogen erzeugter Form. Ebenfalls brauchbar sind die feinteiligen Oxide oder Oxidhydrate des Magnesiums, Calciums, Aluminiums, Yttriums, der Lanthaniden, des Titans, Zirkons und Zinns. Als anorganischer Festkörper kann auch Kohlenstoff, z. B. in Form von Ruß, verwendet werden. Als organische Verbindungen kommen natürliche oder synthetische Produkte, wie z. B. Polysaccharide, insbesondere Stärke und Cellulose, oder organische polymere Verbindungen mit reaktiven Gruppen in Frage. Die auf der Oberfläche der Teilchen befindlichen reaktiven Gruppen sind im Fall der Kieselsäure und der feinteiligen Oxide oder Oxidhydrate die Hydroxylgruppen. Bei der Verwendung von Ruß können durch oberflächliche Oxidation Carboxylgruppen eingeführt werden. Die reaktiven Gruppen der Polysaccharide sind wiederum Hydroxylgruppen. Bei den organischen polymeren Verbindungen ist man in der Wahl der reaktiven Gruppen relativ frei, da vielerlei Polymerisate bekannt sind, welche Hydroxyl-, Carboxyl-, Mercapto- oder andere reaktive Gruppen aufweisen können.

Zur Hydrophilierung und Hydrophobierung kann man sich der hierfür aus dem Stand der Technik bekannten Modifizierungsmittel bedienen. Wie im Stand der Technik bereits geschildert, werden im allgemeinen als hydrophilierende Gruppen Polyoxyethylengruppen verwendet. Es ist natürlich möglich, einen Teil der Oxyethylengruppen durch Oxypropylengruppen zu ersetzen. Hierdurch kann man die Hydrophilie dieser Polyoxyalkylengruppen abstufen. Jedoch sollten nicht mehr als 30 Mol-% der Oxyethylengruppen durch Oxypropylengruppen ersetzt sein, da sonst die Hydrophilie der Polyoxyalkylengruppe zu sehr abgeschwächt wird.

Ebenfalls entsprechend dem Stand der Technik können die hydrophobieren den Gruppen Kohlenwasserstoff gruppen sein. Dabei kommen insbesondere Alkylgruppen und vorzugsweise solche mit mehr als 3 Kohlenstoffatomen im Alkylrest in Frage. Es bieten sich insbesondere die von Fettsäuren mit 10 bis 22 Kohlenstoffatomen abgeleiteten Alkylgruppen an. Man kann statt der Alkylgruppen auch Arylgruppen zur Hydrophobierung verwenden. Die vorgenannten Gruppen können substituiert sein. Eine besondere Hydrophobierung und Oleophobierung erzielt man durch den Einbau von perfluorierten Alkylgruppen.

Die hydrophilen und hydrophoben Gruppen müssen eine reaktive Gruppe aufweisen, über die sie mit der an der Oberfläche der zu modifizierenden Teilchen befindlichen reaktiven Gruppe umgesetzt werden können. Die hydrophilen und/oder hydrophoben Gruppen sind mit der Teilchenmatrix durch eine

$$-CO-,\ -SiO-,\ -\overset{\displaystyle O}{\overset{\|}{C}}O-,\ -NH\overset{\displaystyle O}{\overset{\|}{C}}O-\ \text{oder}\ -NH\overset{\displaystyle O}{\overset{\|}{C}}$$

Brücke verbunden. Es sind auch andere Brückenglieder möglich. Dies ist für die vorliegende Erfindung nicht von ausschlaggebender Bedeutung, denn das Wesen der Erfindung besteht weniger in der Auswahl der hydrophilierenden und hydrophobierenden Gruppen und der Art ihrer Verbindung mit der Matrix der

Festkörperteilchen als vielmehr in der anisotropen räumlichen Verteilung.

Ein weiterer Gegenstand der Erfindung sind die Verfahren, welche die anisotrope Verteilung der hydrophilen und hydrophoben Gruppen auf der Oberfläche der zu modifizierenden Teilchen gewährleisten.

Ein derartiges erfindungsgemäßes Verfahren besteht darin, daß man Mikrohohlkugeln, welche an der äußeren und inneren Oberfläche befindliche reaktive Gruppen aufweisen,

a) in an sich bekannter Weise hydrophiliert (hydrophobiert),

b) die auf ihrer äußeren Oberfläche modifizierten Mikrohohlkugeln auf eine Teilchengröße < 100 µm zerkleinert und

c) die durch die Zerkleinerung freigelegte ursprüngliche innere Oberfläche der erhaltenen Teilchen in an sich bekannter Weise hydrophobiert (hydrophiliert).

Insbesondere bei dem zuerst durchgeführten Teilschritt a) ist anzustreben, daß die Modifizierung der außeren Oberfläche der Mikrohohlkugeln möglichst vollständig erfolgt. Man wird deshalb zweckmäßig einen Überschuß des Modifizierungsmittels verwenden.

Vorzugsweise verwendet man für dieses Verfahren Mikrohohlkugeln aus silicatischem Material, vorzugsweise aus Glas. Zur hydrophilierenden Modifizierung verwendet man dabei vorzugsweise siliciumorganische Verbindungen mit den Struktureinheiten $R^2O(C_2H_4O)_n$— und $\equiv SiOR^1$, wobei bis zu 30 Mol-% der Oxyethylengruppen durch Oxypropylengruppen ersetzt sein können, $R^1$, $R^2$ Alkylreste mit 1 bis 4 Kohlenstoffatomen sind, n eine ganze Zahl $\geq 1$ ist. Besonders bevorzugt verwendet man als siliciumorganische Verbindungen Silane der Formel

$$R^2O(C_2H_4O)_n—R^4—Si(R^3)_{3-a}(OR^1)_a$$

wobei bis zu 30 Mol-% der Oxyethylengruppen durch Oxypropylengruppen ersetzt sein können, a 1, 2 oder 3 ist, $R^3$ ein Alkylrest mit 1 bis 4 Kohlenstoffatomen und $R^4$ ein zweiwertiger Alkylenrest mit 3 bis 6 Kohlenstoffatomen ist. Vorzugsweise enthält $R^4$ 3 Kohlenstoffatome. Die Umsetzung der siliciumorganischen Verbindungen mit den Hydroxylgruppen der Glasmatrix geschieht insbesondere bei erhöhten Temperaturen, z. B. bei Temperaturen von 80 bis 140 °C und kann durch die Anwendung eines Katalysators, wie p-Toluolsulfonsäure, beschleunigt werden.

Die Vermahlung der Teilchen im Schritt b) gelingt in einfacher Weise in einem Mörser oder in einer Mühle, wie z. B. einer Scheiben-Schwingmühle.

Infolge der Zerkleinerung der an ihrer äußeren Oberfläche modifizierten Mikrohohlkugeln liegt für den Teilschritt c) die ursprüngliche innere Oberfläche nun frei, so daß die an dieser Oberfläche befindlichen reaktiven Gruppen mit hydrophoben Modifizierungsmitteln umgesetzt werden können. Bei Mikrohohlkugeln aus Glas verwendet man vorzugsweise als hydrophobierendes Modifizierungsmittel siliciumorganische Verbindungen mit den Struktureinheiten $R^6$— und $\equiv SiOR^1$, wobei $R^6$ ein Alkylrest mit mehr als 3 Kohlenstoffatomen, ein Aryl- oder Alkarylrest oder ein Polysiloxanylrest ist. Besonders bevorzugt verwendet man als siliciumorganische Verbindungen Silane der Formel

$$R_c^7R_d^2Si(OR^1)_{4-(c+d)}$$

wobei $R^7$ ein Alkylrest mit mehr als 3 Kohlenstoffatomen, ein Aryl- oder Alkarylrest, c = 1 oder 2, d = 0 oder 1, c + d = 1, 2 oder 3 bedeuten, oder Organopolysiloxane mit mindestens einer Gruppe —$OR^1$.

So kann man beispielsweise im Teilschritt c) die nun freigelegten reaktiven Gruppen der Glasmatrix mit Dialkyldialkoxysilanen in an sich bekannter Weise umsetzen, wobei mindestens einer der Alkylreste ein Alkylrest mit mehr als 3 Kohlenstoffatomen, ein Arylrest oder ein Alkarylrest ist. Man kann zur Reaktion auch Alkoxypolysiloxane nehmen, deren Alkoxygruppe von niederen Alkoholen mit 1 bis 4 Kohlenstoffatomen abgeleitet ist.

Man erhält nach diesem erfindungsgemäßen Verfahren in einleuchtender Weise Teilchen, welche eine gewisse plättchenförmige Struktur aufweisen, wobei die Plättchenoberflächen jeweils hydrophil bzw. hydrophob modifiziert sind.

Ein weiteres erfindungsgemäßes Verfahren zur Herstellung der anisotrop modifizierten Teilchen besteht vereinfacht dargestellt darin, daß man jeweils getrennt ein Teilchen hydrophobiert, ein zweites Teilchen hydrophiliert und die beiden Teilchen chemisch koppelt.

Dieses erfindungsgemäße Verfahren ist dadurch gekennzeichnet, daß man

a) eine Teilmenge der zu modifizierenden Teilchen in an sich bekannter Weise durch partielle Umsetzung der an der Oberfläche befindlichen reaktiven Gruppen hydrophiliert,

b) eine Teilmenge der zu modifizierenden Teilchen in an sich bekannter Weise durch partielle Umsetzung der an der Oberfläche befindlichen reaktiven Gruppen hydrophobiert,

c) entweder die nach a) oder die nach b) erhaltene modifizierte Teilmenge mit einem, bezogen auf verbliebene reaktive Gruppen, stöchiometrischen Uberschuß einer difunktionellen Verbindung umsetzt und

d) die gemaß c) erhaltenen Teilchen mit den nach b) bzw. a) erhaltenen Teilchen durch Umsetzung der reaktiven Gruppen koppelt.

Dieses Verfahren kann man z. B. mit einem hydroxylgruppenhaltigen Mikrogel durchführen, dessen

Herstellung durch Emulsionspolymerisation von Divinylbenzol und anschließende Umwandlung der an der Oberfläche befindlichen Vinylgruppen in Hydroxyethylgruppen bekannt ist (Makromolekulare Chemie, 178 (1977), 1689 bis 92). Beim Teilschritt a) setzt man zunächst eine Teilmenge des Mikrogels mit einem Hydrophilierungsmittel in, bezogen auf die Hydroxylgruppen des Mikrogels unterstöchiometrischen Mengen um. Als Hydrophilierungsmittel eignet sich hierfür in besonderer Weise ein Polyetherisocyanat, vorzugsweise ein solches der Formel

$$R^2O(C_2H_4O)_nCONHR^5NCO$$

wobei bis zu 30 Mol-% der Oxyethylengruppen durch Oxypropylengruppen ersetzt sein können und $R^5$ ein zweiwertiger Kohlenwasserstoffrest ist. Durch die Verwendung der unterstöchiometrischen Menge des Polyetherisocyanats wird gewährleistet, daß ein Teil der Hydroxylgruppen des Mikrogels erhalten bleibt.

Im Schritt b) wird nun eine zweite Teilmenge des Mikrogels mit ebenfalls unterstöchiometrischen Mengen eines Hydrophobierungsmittels verwendet, wobei als Hydrophobierungsmittel in diesem Falle insbesondere Verbindungen der Formel $R^7COCl$ geeignet sind. $R^7$ ist ein Alkylrest mit mehr als 3 Kohlenstoffatomen. Besonders geeignet sind Fettsäurechloride, die sich von Fettsäuren mit 10 bis 22 Kohlenstoffatomen ableiten. Auch bei dieser zweiten Teilmenge bleiben nach der hydrophobierenden Modifizierung Hydroxylgruppen erhalten. Im Teilschritt c) setzt man nun die restlichen Hydroxylgruppen entweder der hydrophilierten oder der hydrophobierten Teilmengen mit einem Überschuß an Diisocyanat um. Als Diisocyanat kann man die bekannten Verbindungen des Typs $OCNR^8NCO$ verwenden, wobei $R^8$ ein zweiwertiger Kohlenwasserstoffrest, ein Alkylenrest mit 2 bis 6 Kohlenstoffatomen oder ein Arylenrest ist. Man kann auch anstelle der Diisocyanate z. B. Dicarbonsäurechloride verwenden. Bevorzugt sind aber bei der Verknüpfung von Teilchen mit reaktiven Hydroxylgruppen Diisocyanate als Kopplungsmittel. Man erhält im Schritt c) somit wenn man die partiell hydrophil modifizierte Teilmenge mit dem Diisocyanat umgesetzt hat, eine hydrophile Teilmenge, welche freie Isocyanatgruppen aufweist. Diese Teilmenge wird nun zur Kopplung mit der partiell hydrophobierten Teilmenge, die noch reaktive Hydroxylgruppen aufweist, umgesetzt.

Es ist dabei gleichgültig, ob man die Umsetzung mit dem Diisocyanat oder den Dicarbonsäuren in Stufe c) mit den partiell hydrophilierten oder den partiell hydrophobierten Teilchen durchführt.

Auch hierbei ist es dem Fachmann klar, daß Teilchen entstehen, bei denen örtlich Domänen mit hydrophilen Gruppen und Domänen mit hydrophoben Gruppen, die deutlich gegeneinander abgegrenzt sind, entstehen.

In ähnlicher Weise wie das hydroxylgruppenhaltige Mikrogel kann man auch Glaspulver, pyrogen erhaltene Kieselsäure oder feinteiligen Ruß behandeln.

Verwendet man bei diesem zweiten erfindungsgemäßen Verfahren verhältnismäßig sperrige hydrophilierende und/oder hydrophobierende Gruppen, kann es geschehen, daß diese die Kopplungsreaktion der partiell hydrophilierten bzw. partiell hydrophobierten Teilmengen a) und b) behindern. Es kann aber auch der Fall sein, daß man die verbliebenen reaktiven Gruppen der partiell hydrophilierten und/oder hydrophobierten Teilmengen in andere reaktive Gruppen umwandeln will. Dies ist nach einer Variante des zweiten erfindungsgemäßen Verfahrens möglich, welche dadurch gekennzeichnet ist, daß man bei den oder unmittelbar nach den Teilschritten a) und b), vor dem Schritt c), die verbliebenen reaktiven Gruppen mit einer mindestens stöchiometrischen Menge einer mindestens difunktionellen Verbindung umsetzt und die so erhaltenen Teilmengen mit den eingeführten reaktiven Gruppen für die Schritte c) und d) einsetzt.

Diese Verfahrensvariante läßt sich an einem Beispiel noch besser verdeutlichen :

Man verwendet z. B. als Festkörperteilchen pyrogen erzeugte Kieselsäure und hydrophiliert eine Teilmenge dieser Kieselsäure mit einem Polyoxyalkylengruppen enthaltenden Silan, wie es z. B. durch die Formel

$$R^2O(C_2H_4O)_n—R^4—Si(R^3)_{3-a}(OR^1)_a$$

beschrieben wird. Gleichzeitig oder unmittelbar nach der Hydrophilierung läßt man die restlichen reaktiven Gruppen der Kieselsäure mit einem Überschuß einer difunktionellen Verbindung reagieren. Besonders geeignet ist im Falle der Kieselsäure ein Aminoalkylalkoxysilan, insbesondere ein $\gamma$-Aminopropylalkoxysilan. Die zweite Teilmenge der Kieselsäure wird in der vorher genannten Weise durch partielle Umsetzung der Hydroxylgruppen hydrophobiert, wobei man die restlichen Hydroxylgruppen der Kieselsäure ebenfalls mit einem $\gamma$-Aminoalkylalkoxysilan umsetzt. Etwa noch vorhandene freie Hydroxylgruppen der Kieselsäure können z. B. durch Trimethylsilylierung mit Hexamethyldisilazan blockiert werden.

Es liegen nun zwei Teilmengen der Kieselsäure vor : Die eine Teilmenge trägt hydrophile Gruppen und weist reaktive, an Silicium gebundene Aminoalkylgruppen auf. Die zweite Teilmenge ist hydrophobiert und weist ebenfalls reaktive Aminoalkylgruppen auf. Nun kann in der vorbeschriebenen Weise eine

der beiden Teilmengen mit einem stöchiometrischen Überschuß einer difunktionellen Verbindung, vorzugsweise eines Diisocyanats, umgesetzt werden. Anschließend werden die beiden Teilmengen gemischt und die Kopplungsreaktion durchgeführt.

Eine dritte Möglichkeit zur Herstellung der erfindungsgemäßen anisotrop modifizierten Teilchen besteht darin, daß man

a) die Teilchen zunächst in an sich bekannter Weise partiell hydrophobiert,

b) die gemäß a) erhaltenen Teilchen zu einem Gemisch aus einem polaren und einem mit diesem nicht mischbaren unpolaren Lösungsmittel gibt,

c) in dem polaren Lösungsmittel das hydrophilierende Modifizierungsmittel und in dem unpolaren Lösungsmittel das hydrophobierende Modifizierungsmittel löst,

d) die für die Modifizierungsreaktion erforderlichen Reaktionsbedingungen einstellt und

e) die modifizierten Teilchen aus dem Lösungsmittelgemisch abtrennt.

Dieses Verfahren sei am Beispiel der Modifizierung von feinteiligem Aluminiumoxidhydrat erklärt. Zunächst wird das Aluminiumoxidhydrat partiell in an sich bekannter Weise hydrophobiert. Anschließend wird das so behandelte Produkt zu einem Gemisch aus einem polaren und einem mit diesem nicht mischbaren unpolaren Lösungsmittel gegeben. Die partielle Hydrophobierung gemäß Teilschritt a) bewirkt eine in etwa ausgeglichene Benetzung der Festkörperteilchen durch beide flüssige Phasen. Nun wird dem polaren Lösungsmittel ein Hydrophilierungsmittel und dem unpolaren Lösungsmittel ein Hydrophobierungsmittel zugegeben. Beispielsweise kann man als polares Lösungsmittel Dimethylformamid verwenden und ihm ein Polyoxyethylentrialkoxysilan zugeben. Als unpolares Lösungsmittel kann man Hexan verwenden und ihm ein Silan der Formel

$$R_c^7R_d^2Si(OR^1)_{4-(c+d)}$$

zugeben. Man erwärmt nun das Gemisch der Lösungsmittel, so daß in der Grenzfläche eine anisotrope Modifizierung der dort angereicherten Aluminiumoxidhydratteilchen erfolgt. Durch Rühren kann die Phasengrenze zwischen den nicht mischbaren Lösungsmitteln vergrößert und damit die Bepfropfung an der Phasengrenze gefördert werden.

In analoger Weise kann man auch feinteilige getrocknete Stärke, z. B. Quellstärke, hydrophilierend und hydrophobierend behandeln.

Durch die Teilchengröße, aber vor allem durch Variation der hydrophilen und hydrophoben Substituenten hinsichtlich ihrer Struktur und ihres Molekulargewichtes und hinsichtlich ihrer aufgebrachten Menge lassen sich die Eigenschaften der hergestellten modifizierten Festkörperteilchen bestimmen und den jeweiligen, durch die beabsichtigte Anwendung bedingten Anforderungen anpassen.

So ist es beispielsweise leicht möglich, pyrogene Kieselsäure mit verschiedenen Mengen eines hydrophilen Silans und verschiedenen Mengen eines hydrophoben Silans zu behandeln und dadurch Produkte herzustellen, die sich hinsichtlich ihrer Dispergierbarkeit in polaren und unpolaren Lösungsmitteln deutlich unterscheiden.

Die Stabilitäten der Dispersionen in unterschiedlichen Lösungsmittel, wie z. B. in Wasser, Ethanol und Toluol, erlauben eine deutliche Differenzierung von Produkten und ermöglichen, diese hinsichtlich ihrer Hydrophobie bzw. Hydrophilie einzuordnen. Produkte, die sich in ihren Dispersionsstabilitäten unterscheiden, sind auch deutlich verschieden in ihrer Wirksamkeit in bestimmten Anwendungen, wie beispielsweise der Entölung ölgesättigter Sandpackungen.

Mit den feinteiligen hydrophob/hydrophil modifizierten Festkörpern, die durch eine Verknüpfung von hydrophoben mit hydrophilen Anteilen aufgebaut werden, lassen sich mit Hilfe einer Filmwaage nach Langmuir Messungen durchführen, deren Ergebnisse die hydrophile und hydrophobe Bepfropfung der Oberfläche eines Teilchens deutlich zeigen. Für derartige Messungen eignen sich diese modifizierten Festkörper besonders, weil einerseits die Art ihrer Synthese zwangsläufig die räumliche Trennung hydrophiler und hydrophober Bereiche zur Folge hat und andererseits auch die ausschließlich hydrophob bzw. hydrophil modifizierten feinteiligen Komponenten zu Vergleichszwecken zur Verfügung stehen. Der Nachweis ihrer Verknüpfung zeigt den erfolgreichen Aufbau eines erfindungsgemäßen Teilchens. Während z. B. das ausschließlich hydrophobe Produkt durch Adsorption von Palmitinsäure hydrophiler wird und das ausschließlich hydrophile Produkt durch Adsorption der Fettsäure hydrophober wird, sind in dem durch Verknüpfung der hydrophilen mit der hydrophoben Vorstufe entstandenen Produkt keine Eigenschaftsänderungen durch die Adsorption von Palmitinsäure zu erkennen.

Die erfindungsgemaßen Festkörperteilchen zeigen ausgeprägte Wirksamkeit an Phasengrenzflächen. Sie können z. B. bei geeigneter Wahl ihrer hydrophoben und hydrophilen Substituenten als Emulgatoren verwendet werden. Mit Hilfe derartiger Festkorperteilchen ist es möglich, grobteilige Emulsionen herzustellen, die trotz ihrer großen Tröpfchen bemerkenswert stabil gegenüber Koaleszenz sind. Dabei ergibt sich eine weitere wesentliche Eigenschaft der erfindungsgemaßen Festkörper daraus, daß sie in einfacher Weise, z. B. durch Filtration, aus dem emulgierten System entfernt werden können, wobei die Emulsion bricht.

Durch entsprechende Anpassung der hydrophoben und hydrophilen Modifizierung können die erfindungsgemäßen Festkörperteilchen aber auch als Emulsionsspalter wirksam werden. Es ist vorteilhaft, die Festkörperteilchen vor der Anwendung in einem Lösungsmittel fein zu verteilen. Besonders

vorteilhaft ist es, die erfindungsgemäßen Festkörperteilchen zusammen mit an sich bekannten Dismulgatoren einzusetzen. Hier ist häufig ein Synergismus zu beobachten.

Die erfindungsgemäßen Festkörperteilchen können auch bei der Bildung und Stabilisierung wäßriger Schäume zu einer Wirkungsverbesserung an sich bekannter Tenside beitragen.

Weiterhin lassen sich die erfindungsgemäßen modifizierten Festkörper mit besonderem Vorteil bei der tertiären Erdölförderung verwenden. Sie können insbesondere bei Flutungsverfahren der Tensidlösung zugesetzt werden und führen zu einer erhöhten Entölung.

In den folgenden Beispielen wird die Herstellung verschiedener anisotrop modifizierter Festkörper entsprechend der Erfindung gezeigt. Es werden außerdem noch die grenzflächenwirksamen Eigenschaften dieser Produkte und ihre Anwendbarkeit beschrieben.

## Beispiel 1

Mikrohohlkugeln, die aus anorganischen Silicaten bestehen und mit Luft gefüllt sind, sind unter der Bezeichnung Q-Cel 300® im Handel erhältlich. Der mittlere Teilchendurchmesser beträgt 65 µm, die Wandstärke etwa 1 µm. Durch eine Suspension von 10 g dieser Mikrohohlkugeln in 300 ml trockenem Ligroin werden unter gutem Rühren 5 ml gasförmiger Chlorwasserstoff geleitet. Anschließend wird die Suspension mit 0,42 g Methyloctadecyldimethoxysilan versetzt. Unter Feuchtigkeitsausschluß wird 20 h zum Rückfluß erhitzt. Nach dem Abkühlen wird der Feststoff abfiltriert, gewaschen und getrocknet. Er weist einen Kohlenstoffgehalt von 1,1 % C auf. Die modifizierten Mikrohohlkugeln werden erneut mit 5 ml trockenem Ligroin gemischt und in einer Scheibenschwingmühle während 15 Min. zu 1 bis 20 µm großen Teilchen gemahlen, so daß die mittlere Teilchengröße 5 µm beträgt. Die Dicke der Teilchen wird durch die Wandstärke der Mikrohohlkugeln bestimmt. Unter dem Mikroskop ist die erwartete Plättchenform der Teilchen deutlich erkennbar. Mit 100 ml trockenem Ligroin werden die Teilchen aus der Mühle gespült. Die Suspension wird mit weiteren 150 ml Ligroin verdünnt und unter Feuchtigkeitsausschluß mit 0,42 g des Silans der mittleren Formel

$$CH_3O(CH_2CH_2O)_8(CH_2)_3Si(OC_2H_5)_3$$

20 h unter Rückfluß erhitzt. Nach dem Abkühlen wird der Feststoff abfiltriert, gewaschen und getrocknet. Er weist einen Kohlenstoffgehalt von 1,7 % C auf.

## Beispiel 2

A) 100 g einer pyrogenen Kieselsäure einer mittleren Primärteilchengröße von 12 nm und einer Oberfläche von 200 m²/g werden in 1 300 ml trockenem Ligroin suspendiert und zusammen mit 4,9 g des Silans der mittleren Formel

$$CH_3O(CH_2CH_2O)_9(CH_2)_3Si(OC_2H_5)_3$$

und 4,38 g γ-Aminopropyltriethoxysilan 24 h unter Feuchtigkeitsausschluß und Rühren zum Rückfluß erhitzt. Nach dem Abkühlen wird der Feststoff abfiltriert, 18 h mit Toluol im Soxhlet extrahiert und getrocknet. Das Produkt enthält 15,1 % C und 0,4 % N.

Das trockene Produkt wird fein pulverisiert und in einer Apparatur mit Rückflußkühler mit 5 g Hexamethyldisilazan versetzt. Durch Eintauchen in ein 130 °C heißes Ölbad wird das Reaktionsgemisch 4 h erhitzt. Anschließend wird das Produkt bei 20 Torr (2 700 Pa) und 40 °C getrocknet. Das Produkt enthält 16,7 % C.

B) Nach der gleichen Arbeitsweise wie unter A) werden 100 g der gleichen pyrogenen, unbehandelten Kieselsäure in Ligroin mit 29,44 g Octadecyltriethoxysilan und 4,38 g γ-Aminopropyltriethoxysilan während 24 h zur Reaktion gebracht und anschließend isoliert. Das Produkt enthält 13,4 % C und 0,35 % N.

Ebenso wie unter A) wird das pulverisierte trockene Produkt danach mit 5 g Hexamethyldisilazan umgesetzt und getrocknet. Die Elementaranalyse ergibt 14,1 % C.

Das trockene Produkt wird wiederum in 1 300 ml trockenem Ligroin aufgeschlämmt und mit 11 g 1,6-Diisocyanatohexan und 0,13 g 1,4-Diazabicyclo(2,2,2)octan 3 h bei 60 °C gerührt. Nach der Reaktion wird das Produkt abfiltriert und mit Toluol im Soxhlet 15 h extrahiert. Das Produkt enthält nach dem Trocknen 0,72 % Isocyanatgruppen.

115 g des unter A) hergestellten Produktes, 132 g des unter B) hergestellten Produktes und 0,25 g 1,4-Diazabicyclo(2,2,2)octan werden mit so viel trockenem Ligroin versetzt, wie benötigt wird, um eine gerade noch rührbare Suspension zu erhalten. Unter Feuchtigkeitsausschluß und kräftigem Rühren wird 60 h unter Rückfluß erhitzt. Anschließend wird die Suspension im Soxhlet 8 h mit Toluol extrahiert. Das bei 20 Torr (2 700 Pa) und 40 °C getrocknete Produkt enthält 0,02 % Isocyanatgruppen.

## Beispiel 3

Ein Hydroxylgruppen enthaltendes Mikrogel wird entsprechend der von U. Seitz in « Makromolekulare Chemie » 178, 1689-92 (1977) angegebenen Vorschritt aus technischem Divinylbenzol hergestellt.

A) 10 g des Hydroxylgruppen enthaltenden Mikrogels werden in 50 ml trockenem Toluol zusammen mit 2,5 g des Isocyanats der mittleren Formel

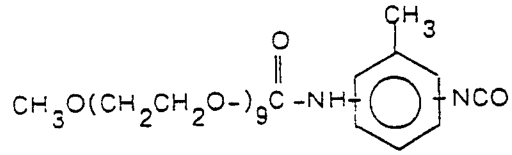

und 10 mg 1 4-Diazabicyclo(2,2,2)octan unter Feuchtigkeitsausschluß 8 h zum Rückfluß erhitzt. Nach dem Abkülen wird zentrifugiert und anschließend noch zweimal in Toluol dispergiert und zentrifugiert. Das Produkt wird bei Raumtemperatur unter vermindertem Druck getrocknet. Es enthält 0, 7 % N.

B) 10 g des Hydroxylgruppen enthaltenden Mikrogels werden in 50 ml trockenem Pyridin zusammen mit 3,0 g Octadecanoylchlorid unter Feuchtigkeitsausschluß 16 h zum Rückfluß erhitzt. Nach dem Abkühlen wird zentrifugiert, in trockenem Methanol auf genommen und wieder zentrifugiert. Dieser Vorgang wird wiederholt um Pyridin und Pyridinhydrochlorid zu entfernen. Nach dem Trocknen wird das Produkt in 50 ml trockenem Toluol dispergiert und zusammen mit 15 g 1,6-Diisocyanatohexan und 10 mg 1,4-Diazabicyclo(2,2,2)octan unter Stickstoff atmosphäre 20 h zum Rückfluß erhitzt. Nach dem Abkühlen wird zentrifugiert, wiederum in trockenem Toluol dispergiert und erneut zentrifugiert. Dieser Vorgang wird noch dreimal wiederholt. Das Produkt wird bei Raumtemperatur unter vermindertem Druck getrocknet. Es enthält 1,9 % NCO-Gruppen.

5 g des unter A) hergestellten Produktes werden mit 5 g des unter B) hergestellten Produktes und 5 mg 1,4-Diazabicyclo(2,2,2) octan sowie 5 mg Dibutylzinndilaurat in 30 ml trockenem Toluol für 65 h unter Rühren zum Rückfluß erhitzt. Nach dem Abkühlen wird zentrifugiert, nochmals in Toluol aufgenommen und erneut zentrifugiert. Das Produkt wird bei Raumtemperatur unter vermindertem Druck getrocknet. Es enthält < 0,05 % NCO-Gruppen.

Beispiel 4

Analog zu der in Beispiel 3 geschilderten Arbeitsweise wird Ruß einer Teilchengröße von 13 nm, der 1,13 meq/g Carboxylgruppen und 0,44 meq/g phenolischer Hydroxylgruppen an der Oberfläche gebunden enthält, mit Isocyanat-funktionellen hydrophilierenden und hydrophobierenden Gruppen umgesetzt. Entsprechende Reaktionen werden von N. Tsubokawa, H. Matsumoto und Y. Sone in « Journal of Polymer Science », Polymer Chemistry Edition, 20, 1943-1946 (1982) beschrieben.

A) 25 g getrockneter Ruß werden zusammen mit 5,7 g des Isocyanats der mittleren Formel

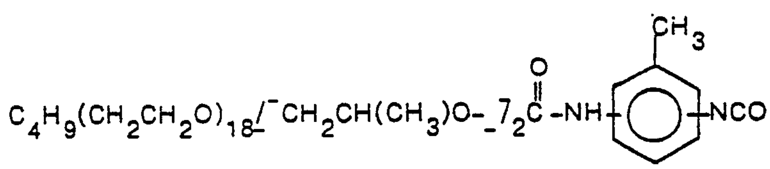

in 300 ml trockenem Toluol unter Feuchtigkeitsausschluß durch Rühren und Einwirken von Ultraschall verteilt und anschließend 12 h unter Feuchtigkeitsausschluß zum Rückfluß erhitzt. Nach dem Abkühlen wird der Feststoff durch Zentrifugieren abgetrennt und im Soxhlet 48 h mit Toluol extrahiert. Nach dem Trocknen enthält das Produkt 0,45 % N.

B) 25 g getrockneter Ruß werden zusammen mit 3,9 g Octadecylisocyanat in 300 ml trockenem Toluol unter Feuchtigkeitsausschluß durch Rühren und Einwirken von Ultraschall verteilt und anschließend 12 h unter Feuchtigkeitsausschluß zum Rückfluß erhitzt. Nach dem Abkühlen wird der Feststoff durch Zentrifugieren abgetrennt und erneut in 300 ml getrocknetem Toluol zusammen mit 8 g 1,6-Diisocyanatohexan dispergiert. Nach 12 h Reaktion bei Rückflußtemperatur unter Feuchtigkeitsausschluß wird abgekühlt und der Feststoff durch Zentrifugieren abgetrennt. Er wird anschließend im Soxhlet 48 h mit trockenem Toluol extrahiert. Nach dem Trocknen wird der Isocyanatgruppengehalt des Feststoffes zu 1,8 % bestimmt.

10 g des unter A) hergestellten modifizierten Rußes werden mit 10 g des unter B) hergestellten Isocyanatgruppen enthaltenden Rußes und 200 mg Triethylamin in 300 ml trockenem Toluol sorgfältig dispergiert und unter Feuchtigkeitsausschluß und Rückfluß 60 h erhitzt. Nach dem Abkühlen wird zentrifugiert. Anschließend wird der Feststoff im Soxhlet 20 h mit trockenem Toluol extrahiert. Nach dem Trocknen wird der Isocyanatgruppengehalt des Produktes zu 0,05 % bestimmt.

Beispiel 5

Getrocknete Quellstärke wird in einer Kugelmühle zu einer mittleren Korngröße von 3 µm zerkleinert.

25 g dieser Stärke werden in einer Lösung von 3,3 g Octadecylisocyanat und 10 mg Triethylamin in 100 ml Cyclohexan unter Feuchtigkeitsausschluß 1 h unter Rückfluß erhitzt. Anschließend wird der Suspension eine Lösung von 3,4 g des Isocyanats der mittleren Formel

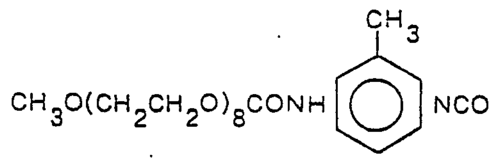

in 100 ml trockenem Dimethylformamid zugesetzt. Unter kraftigem Rühren wird das Reaktionsgemisch weitere 20 h unter Feuchtigkeitsausschluß zum Rückfluß erhitzt. Nach dem Abkühlen wird das Produkt abfiltriert und dreimal mit je 200 ml Toluol aufgeschlämmt und wieder abfiltriert. Nach dem Trocknen bei 40 °C und 20 Torr (2 700 Pa) enthält das Produkt 0,8 % N.

Beispiel 6

100 g feinteiliges, getrocknetes Aluminiumoxid (Teilchengröße 5 bis 30 nm, Oberfläche 100 $m^2/g$) werden in einer Lösung von 6,23 g Dodecyltriethoxysilan in 800 ml getrocknetem Cyclohexan suspendiert und 30 Min. unter Rühren zum Rückfluß erhitzt. Anschließend werden dem Reaktionsgemisch eine Lösung von 6,23 g Dodecyltriethoxysilan in 200 ml getrocknetem Cyclohexan und eine Lösung von 5,73 g des Silans der mittleren Formel

$$CH_3O(CH_2CH_2O)_6(CH_2)_3Si(OCH_3)_3$$

in 500 ml Wasser zugegeben. Unter kräftigem Rühren wird die Suspension 8 h unter Rückfluß erhitzt. Nach dem Abkühlen wird das Produkt abfiltriert und im Soxhlet 24 h mit Aceton extrahiert. Das Produkt enthält 4,5 % C.

Beispiel 7

Aus getrockneter, pyrogener Kieselsäure einer mittleren Primärteilchengröße von 12 nm und einer Oberfläche von 200 $m^2/g$, aus Octadecyltriethoxysilan (1) und aus dem Silan der mittleren Formel

$$C_4H_9(CH_2CH_2O)_{38}[CH_2CH(CH_3)O]_2(CH_2)_3Si(OC_2H_5)_3 \quad (2)$$

werden vier unterschiedliche Produkte hergestellt. Nach beendeter Reaktion werden die Produkte abfiltriert, im Soxhlet 48 h mit Toluol extrahiert und bei 40 °C und 20 Torr (2 700 Pa) getrocknet.

A) 25 g Kieselsäure, 80 mg p-Toluolsulfonsäure und 5,04 g Silan 1 werden in 400 ml Petroleumbenzin (Kp. ca. 40 °C) 5 h unter Feuchtigkeitsausschluß zum Rückfluß erhitzt. Anschließend wird der Suspension eine Lösung von 13,4 g des Silans 2 in 250 ml trockenem Dimethylformamid zugefügt. Unter Feuchtigkeitsausschluß wird das Reaktionsgemisch weitere 8 h unter Rückfluß und kräftigem Rühren erhitzt. Das Produkt enthält 9,5 % C.

B) 25 g Kieselsäure, 80 mg p-Toluolsulfonsäure und 5,04 g Silan 1 werden in 400 ml Cyclohexan 5 h unter Feuchtigkeitsausschluß zum Rückfluß erhitzt. Anschließend wird der Suspension eine Lösung von 13,4 g des Silans 2 in 250 ml trockenem Dimethylformamid zugefügt. Unter Feuchtigkeitsausschluß wird das Reaktionsgemisch weitere 8 h unter kräftigem Rühren zum Rückfluß erhitzt. Das Produkt enthält 14 % C.

C) 25 g Kieselsäure und 1,26 g Silan 1 werden in 400 ml Petroleumbenzin (Kp. ca. 40 °C) 1 h unter Feuchtigkeitsausschluß zum Rückfluß erhitzt. Anschließend wird der Suspension eine Lösung von 3,8 g Silan 1, 13,4 g Silan 2 und 100 mg Dodecylbenzolsulfonsäure in 250 ml trockenem Dimethylformamid zugefügt. Unter Feuchtigkeitsausschluß wird das Reaktionsgemisch weitere 8 h unter kräftigem Rühren zum Rückfluß erhitzt. Das Produkt enthält 11,5 % C.

D) 25 g Kieselsäure und 0,5 g Silan 1 werden in 400 ml Petroleumbenzin (Kp. ca. 40 °C) 30 Min. unter Feuchtigkeitsausschluß zum Rückfluß erhitzt. Anschließend wird der Suspension eine Lösung von 4,6 g Silan 1, 13,4 g Silan 2 und 100 mg Dodecylbenzolsulfonsäure in 250 ml trockenem Dimethylformamid zugefügt. Unter Feuchtigkeitsausschluß wird das Reaktionsgemisch weitere 8 h unter kräftigem Rühren zum Rückfluß erhitzt. Das Produkt enthält 15 % C.

Beispiel 8

Messung von Dispersionsstabilitäten

Jeweils 1 g der anisotrop modifizierten, feinteiligen Festkörper, deren Herstellung in Beispiel 7 beschrieben ist, werden in 100 ml destilliertem Wasser, Ethanol oder Toluol suspendiert. Dazu wird die Suspension in einem 250-ml-Becherglas zugleich mit einem Flügelrührer bewegt und mit Ultraschall 15 Min. behandelt. Anschließend werden die Suspensionen in 100-ml-Mensuren gegeben. Gemessen wird die Zeit, die benötigt wird, um 50 ml klare, überstehende Flüssigkeit zu erhalten. Die folgenden Ergebnisse werden erhalten :

| | Toluol | Ethanol | Wasser |
|---|---|---|---|
| Produkt B | 81 Min. | 31 Min. | 0,5 Min. |
| Produkt C | 31 Min. | 60 Min. | 0 Min. |
| Produkt A | 8 Min. | 20 Min. | 3 Min. |
| Produkt D | 10 Min. | 4 Min. | > 24 h |

## Beispiel 9

Messungen mit einer Filmwaage nach Langmuir

Anisotrop hydrophil und hydrophob modifizierte Kieselsäure, deren Herstellung aus hydrophil bzw. hydrophob modifizierten Vorstufen in Beispiel 2 beschrieben ist, wird mittels einer Filmwaage nach Langmuir untersucht. Durch Rühren und Behandeln mit Ultraschall werden die folgenden Suspensionen hergestellt :

S 1 : 100 mg hydrophilierte Kieselsäure A in 10 g Ethanol
S 2 : 100 mg hydrophobierte Kieselsäure B in 10 g Ethanol
S 3 : 100 mg anisotrop hydrophil und hydrophob modifizierte Kieselsäure in 10 g Ethanol
S 4 : 100 mg hydrophilierte Kieselsäure A und 6 mg Palmitinsäure in 10 g Ethanol
S 5 : 100 mg hydrophobierte Kieselsäure B und 2,5 mg Palmitinsäure in 10 g Ethanol
S 6 : 100 mg anisotrop hydrophil und hydrophob modifizierte Kieselsäure und 2,5 mg Palmitinsäure in 10 g Ethanol.

Etwa 2 bis 3 mg dieser Suspensionen werden jeweils auf der Wasseroberfläche eines Langmuir-Troges bei 25 °C gespreitet. Die aufgebrachte Menge wird durch Auswiegen genau bestimmt. Nach einer Wartezeit von 10 Min. wird komprimiert. Die erhaltenen Druck-Flächen-Isothermen lassen sich wie folgt charakterisieren :

S 1 : kein Druckanstieg, keine Oberflächenbelegung nachweisbar
S 2 : Oberflächenbelegung nachweisbar, Druckanstieg bis 70 mN/m, Flächenbedarf 40 $cm^2/mg$ (= 4 $m^2/g$)
S 3 : Oberflächenbelegung nachweisbar, Druckanstieg bis 72 mN/m, Flächenbedarf 47 $cm^2/mg$ (= 4,7 $m^2/g$)
S 4 : Oberflächenbelegung durch Palmitinsäurefilm nicht nachweisbar, geringe, aber deutlich feststellbare Oberflächenbelegung durch modifizierte Kieselsäure
S 5 : Oberflächenbelegung durch Palmitinsäurefilm nachweisbar, Oberflächenbelegung durch modifizierte Kieselsäure nicht nachweisbar
S 6 : Oberflächenbelegung durch Palmitinsäurefilm nicht nachweisbar, Oberflächenbelegung durch modifizierte Kieselsäure nachweisbar und gegenüber dem mit S 3 erhaltenen Ergebnis nahezu unverändert.

Die erhaltenen Ergebnisse lassen sich durch Adsorption der Palmitinsäure auf den modifizierten Kieselsäuren und den dadurch bedingten Veränderungen der Oberflächeneigenschaften der Kieselsäurepartikel mit den folgenden Annahmen erklären :

Die Adsorption von Palmitinsäure auf der hydrophil modifizierten Kieselsäure A erfolgt durch bevorzugte Haftung der Carboxylgruppen an der Kieselsäure und bewirkt dadurch eine partielle Hydrophobierung.

Die Adsorption der Palmitinsäure auf der hydrophob modifizierten Kieselsäure B erfolgt hingegen durch bevorzugte Haftung der Alkylkette. Die freien Carboxylgruppen bewirken eine Hydrophilierung der Oberfläche.

Die Adsorption der Palmitinsäure auf der anisotrop hydrophil und hydrophob modifizierten Kieselsäure erfolgt nach beiden oben beschriebenen Möglichkeiten. Dadurch werden die zuvor hydrophoben Bereiche zwar hydrophiliert, die hydrophilen Bereiche jedoch zugleich hydrophobiert.

## Beispiel 10

Herstellung von Emulsionen, die mit erfindungsgemäßen, modifizierten Festkörpern hergestellt werden, und deren Spaltung

1) 0,5 g hydrophil und hydrophob ausgerüsteter Festkörperteilchen, deren Herstellung durch Mahlen und Modifizieren von Mikrohohlkugeln in Beispiel 1 beschrieben ist, werden zusammen mit 50 ml Toluol und 50 ml destilliertem Wasser in einem zur Hälfte gefüllten, verschlossenen Gefäß durch Auf- und Abwärtsbewegen intensiv geschüttelt. Die dadurch entstehende Wasser-in-Öl-Emulsion zeichnet sich durch eine mittlere Tröpfchengröße von 0,5 mm aus. Zwar setzen sich die Wassertröpfchen ab, so daß sich eine überstehende Toluolschicht ausbildet, jedoch sind die Wassertröpfchen auch nach 12 Monaten Lagerung bei Raumtemperatur gegen Koaleszenz stabil. Die Ausbildung einer Wasserphase wird dementsprechend nicht beobachtet.

Zur Spaltung der Emulsion wird diese durch ein Faltenfilter gegeben. Im Filtrat trennen sich Toluol und Wasserphase.

2) In einem 1-l-Flachbodengefäß mit einem Innendurchmesser von 10 cm werden 2 g des erfindungsgemäß modifizierten feinteiligen Aluminiumoxids, dessen Herstellung in Beispiel 6 beschrieben ist, und 60 ml Spindelöl (Viskosität $\eta$ = 60 mPas bei 20 °C) vorgelegt. Mit einer Mizer-Rührscheibe von 6 cm Durchmesser wird die Suspension mit 2 000 Upm gerührt, während 40 ml Wasser innerhalb von 10 Min. zugegeben werden. Die entstandene Wasser-in-Öl-Emulsion wird anschließend noch 10 Min. gerührt. Die Temperatur übersteigt nicht 25 °C. Es wird eine Emulsion erhalten. Zur Spaltung der Emulsion wird diese durch ein doppelt gelegtes Filterpapier gepreßt. Im Filtrat trennen sich Öl- und Wasserphase, der Feststoff bleibt zum weitaus überwiegenden Teil auf dem Filter zurück.

## Beispiel 11

Spaltung einer Rohölemulsion

Erfindungsgemäß modifizierte, feinteilige Feststoffe werden in Kombination mit einem Ethylenoxid-Propylenoxid-Blockcopolymeren als organischem, löslichen Spalter eingesetzt.

0,5 g modifizierter Feststoff werden durch Rühren und mit Hilfe von Ultraschall in 4,5 g des organischen Dismulgators und 95 ml Methanol fein dispergiert. Die hergestellten und überprüften Zubereitungen enthalten im einzelnen :

D 1 : 5 g organischen Spalter ; Methanol

D 2 : 4,5 g organischen Spalter ; 0,5 g pyrogene, nicht modifizierte Kieselsäure, wie sie in Beispiel 7 verwendet wird ; Methanol

D 3 : 4,5 g organischen Spalter ; 0,5 g erfindungsgemäß modifizierte Kieselsäure gemäß Beispiel 7, Produkt C) ; Methanol

Jeweils 100 ml eines schwer spaltbaren, mittelschweren, venezolanischen Rohöles, dessen Wassergehalt 34 % beträgt, werden auf 80 °C erwärmt und mit je 0,1 ml der vorbereiteten Dispersionen versetzt. Nach kräftigem Schütteln werden die Proben bei 90 °C stehengelassen. Nach 24 h werden die Menge abgespaltenen Wassers und der Restwassergehalt in der überstehenden Ölphase bestimmt.

| Zubereitung | abgeschiedenes Wasser [ml] | Restwasser % |
|---|---|---|
| D 1 | 9 | 27 |
| D 2 | 9 | 26 |
| D 3 | 12 | 22 |

## Beispiel 12

Schaumstabilisierende Wirkung erfindungsgemäß hergestellter Produkte im Gemisch mit einem löslichen Tensid

Die Dispersionen enthalten als lösliches Tensid ein Silicontensid, welches in der DE-PS 18 02 052 beschrieben ist. Dem Produkt kommt die folgende Formel zu :

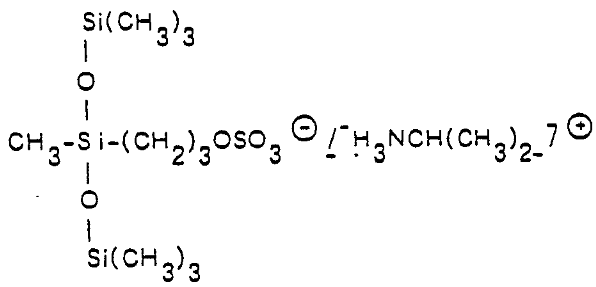

In der genannten Patentschrift wird ein Schlagschaumtest beschrieben, der darin besteht, daß eine Lochscheibe in einem senkrecht stehenden Zylinder innerhalb der zu verschäumenden, 3 cm hoch stehenden Flüssigkeit 40mal auf — und abbewegt wird. Die Höhe der entstandenen Schaumsäule und die Zeit, in der sich 50 % der verschäumten Flüssigkeit zurückgebildet haben, werden bestimmt. Nach dieser Methode werden die folgenden Zubereitungen, die alle mit destilliertem Wasser hergestellt werden, geprüft :

Z 1 : 2 % Silicontensid
Z 2 : 1,8 % Silicontensid, 0,2 % unbehandelte pyrogene Kieselsäure, wie sie in Beispiel 7 eingesetzt wird
Z 3 : 1,8 % Silicontensid, 0,2 % Produkt B) aus Beispiel 7
Z 4 : 1,8 % Silicontensid, 0,2 % Produkt A) aus Beispiel 7
Z 5 : 1,8 % Silicontensid, 0,2 % Produkt D) aus Beispiel 7

Die Zubereitungen Z 3, Z 4 und Z 5 enthalten die erfindungsgemäß hergestellten modifizierten Festkörperteilchen.

Die folgenden Ergebnisse werden erhalten :

| Zubereitung | Schaumhöhe /¯cm_7 | Halbwertszeit /¯Min._7 |
|---|---|---|
| Z 1 | 11 | 2,90 |
| Z 2 | 13,5 | 2,45 |
| Z 3 | 8 | 0,70 |
| Z 4 | 17 | 3,68 |
| Z 5 | 16 | 4,50 |

Wie die Ergebnisse zeigen, ist eine anwendungsbezogene Anpassung der Modifizierung feinteiliger Feststoffe insbesondere hinsichtlich der Balance hydrophiler und hydrophober Gruppen Voraussetzung fur die Wirksamkeit eines Produktes. Kriterien für die Wahl eines Produktes bieten z. B. die aus der Prüfung der Dispersionsstabilitäten in Toluol, Ethanol und Wasser gewonnenen Daten.

## Beispiel 13

Entölung ölgesättigter Sandpackungen

Sandpackungen werden durch Einrütteln von Quarzsand (Korngrößenverteilung von 0,01 bis 0,15 mm) in ein Acrylglasrohr hergestellt. Das Rohr mißt 50 cm in der Länge und 3 cm im Durchmesser. Bei 50 °C werden die Sandpackungen zunächst mit Salzwasser (2 % Salinität) und anschließend mit einem

wasserfreien Rohöl (Nordsee) gesättigt. Anschließend wird durch Fluten mit Salzwasser ein Restölgehalt von etwa 30 % des ursprünglich vorhandenen Öles eingestellt, bevor mit den untersuchten Lösungen bzw. Dispersionen geflutet wird.

Bei dem eingesetzten löslichen Tensid handelt es sich um ein Naphthensäurecarboxybetain (Molgewicht 397) der Art, wie es in der deutschen Patentschrift 25 32 469 beschrieben ist. Dieses Tensid wird nicht, etwa durch Mischen mit einem anderen Tensid, optimal auf das bestehende Öl/Wasser-System abgestimmt.

Neben den erfindungsgemäß modifizierten, feinteiligen Festkörpern wird auch eine aus dem Produkt DB 31® der Dow Corning Corporation isolierte Kieselsäure eingesetzt.

Die folgenden sieben Zubereitungen in Wasser mit 2 % Salinität werden zur Entölung eingesetzt :

T 1 : 2 % Naphthensäurecarboxybetain

T 2 : 1,5 % Naphthensäurecarboxybetain, 0,5 % pyrogene Kieselsäure, wie sie zur Herstellung der in Beispiel 7 beschriebenen Produkte eingesetzt wird

T 3 : 1,5 % Naphthensäurecarboxybetain, 0,5 % Kieselsaure aus DB 31®

T 4 : 1,5 % Naphthensäurecarboxybetain, 0,5 % Produkt B) aus Beispiel 7

T 5 : 1,5 % Naphthensäurecarboxybetain, 0,5 % Produkt C) aus Beispiel 7

T 6 : 1,5 % Naphthensäurecarboxybetain, 0,5 % Produkt A) aus Beispiel 7

T 7 : 1,5 % Naphthensäurecarboxybetain, 0,5 % Produkt D) aus Beispiel 7

Die Zubereitungen werden durch Verteilen der feinteiligen Feststoffe in der wäßrigen Naphthensäurecarboxybetainlösung durch Rühren unter gleichzeitiger Behandlung mit Ultraschall hergestellt.

Nachdem jeweils 1,5 Porenvolumen der untersuchten Zubereitungen durch die Sandpackung gepumpt worden sind, wird der erzielte Ölaustrag und somit die gegenüber dem Fluten mit Wasser erhaltene Mehrentölung gemessen.

| Zubereitung | Entölung mit Salzwasser % | Gesamtentölung % | Mehrentölung % |
|---|---|---|---|
| T 1 | 76 | 76 | 0 |
| T 2 | 77 | * | * |
| T 3 | 78 | 82 | 4 |
| T 4 | 79 | 80,5 | 1,5 |
| T 5 | 79 | 82 | 3 |
| T 6 | 79 | 88 | 9 |
| T 7 | 78 | 79 | 1 |

* führt zur Verstopfung der Sandpackung

Wie im Beispiel 8 zeigt sich auch hier, daß eine anwendungsbezogene Anpassung der Modifizierung der eingesetzten feinteiligen Feststoffe notwendig ist.

**Patentansprüche**

1. In organischen Lösungsmitteln und Wasser unlösliche, an ihrer Oberfläche durch hydrophile und hydrophobe Gruppen modifizierte Teilchen einer Teilchengröße < 100 μm, dadurch gekennzeichnet, daß die hydrophilen und hydrophoben Gruppen auf der Oberfläche der modifizierten Teilchen anisotrop verteilt sind.

2. Teilchen nach Anspruch 1, dadurch gekennzeichnet, daß sie als hydrophile Gruppen Polyoxyethylengruppen, wobei bis zu 30 Mol-% der Oxyethyleneinheiten durch Oxypropyleneinheiten ersetzt sein können, aufweisen.

3. Teilchen nach Anspruch 1, dadurch gekennzeichnet, daß sie als hydrophobe Gruppen Kohlenwasserstoffgruppen aufweisen.

4. Teilchen nach Anspruch 3, dadurch gekennzeichnet, daß sie als Kohlenwasserstoffgruppen Alkyl- oder Arylgruppen, die jeweils substituiert sein können, aufweisen.

5. Teilchen nach einem oder mehreren der vorhergehenden Ansprüche, dadurch gekennzeichnet, daß die hydrophilen und/oder hydrophoben Gruppen mit der Teilchenmatrix durch eine

$$-CO-,\ -SiO-,\ -\overset{\overset{O}{\|}}{C}O-,\ -NH\overset{\overset{O}{\|}}{C}O-\ \text{oder}\ -NH\overset{\overset{O}{\|}}{C}-.$$

Brücke verbunden sind.

6. Verfahren zur Herstellung von Teilchen mit anisotrop modifizierter Oberfläche nach einem oder mehreren der Ansprüche 1 bis 5, dadurch gekennzeichnet, daß man Mikrohohlkugeln, welche an der äußeren und inneren Oberfläche befindliche reaktive Gruppen aufweisen,

a) in an sich bekannter Weise hydrophiliert (hydrophobiert),

b) die auf ihrer äußeren Oberfläche modifizierten Mikrohohlkugeln auf eine Teilchengröße < 100 µm zerkleinert und

c) die durch die Zerkleinerung freigelegte ursprungliche innere Oberfläche der erhaltenen Teilchen in an sich bekannter Weise hydrophobiert (hydrophiliert).

7. Verfahren nach Anspruch 6, dadurch gekennzeichnet, daß man es mit Mikrohohlkugeln aus silicatischem Material, vorzugsweise Glas, durchführt.

8. Verfahren zur Herstellung von Teilchen mit anisotrop modifizierter Oberfläche nach einem oder mehreren der Ansprüche 1 bis 5, dadurch gekennzeichnet, daß man

a) eine Teilmenge der zu modifizierenden Teilchen in an sich bekannter Weise durch partielle Umsetzung der an der Oberfläche befindlichen reaktiven Gruppen hydrophiliert,

b) eine Teilmenge der zu modifizierenden Teilchen in an sich bekannter Weise durch partielle Umsetzung der an der Oberfläche befindlichen reaktiven Gruppen hydrophobiert,

c) entweder die nach a) oder die nach b) erhaltene modifizierte Teilmenge mit einem, bezogen auf verbliebene reaktive Gruppen, stöchiometrischen Überschuß einer difunktionellen Verbindung umsetzt und

d) die gemäß c) erhaltenen Teilchen mit den nach b) bzw. a) erhaltenen Teilchen durch Umsetzung der reaktiven Gruppen koppelt.

9. Verfahren nach Anspruch 8, dadurch gekennzeichnet, daß man bei den oder unmittelbar nach den Teilschritten a) und b), vor dem Schritt c), die verbliebenen reaktiven Gruppen mit einer mindestens stöchiometrischen Menge einer mindestens difunktionellen Verbindung umsetzt und die so erhaltenen Teilmengen mit den eingeführten reaktiven Gruppen für die Schritte c) und d) einsetzt.

10. Verfahren nach Anspruch 8 oder 9, dadurch gekennzeichnet, daß man im Schritt c) als difunktionelle Verbindungen Diisocyanate oder Dicarbonsäurechloride verwendet.

11. Verfahren nach Anspruch 9, dadurch gekennzeichnet, daß man als difunktionelle Verbindungen Aminoalkylalkoxysilane verwendet.

12. Verfahren zur Herstellung von Teilchen mit anisotropisch modifizierter Oberfläche nach einem oder mehreren der Ansprüche 1 bis 5, dadurch gekennzeichnet, daß man

a) die Teilchen zunächst in an sich bekannter Weise partiell hydrophobiert,

b) die gemäß a) erhalten Teilchen zu einem Gemisch aus einem polaren und einem mit diesem nicht mischbaren unpolaren Lösungsmittel gibt,

c) in dem polaren Lösungsmittel das hydrophilierende Modifizierungsmittel und in dem unpolaren Lösungsmittel das hydrophobierende Modifierungsmittel löst,

d) die für die Modifizierungsreaktion erforderlichen Reaktionsbedingungen einstellt und

e) die modifizierten Teilchen aus dem Lösungsmittelgemisch abtrennt.

13. Verfahren nach den Ansprüchen 6, 7, 8 und 12, dadurch gekennzeichnet, daß man als hydrophilierendes Modifizierungsmittel siliciumorganische Verbindungen mit den Struktureinheiten $R^2O(C_2H_4O)_n$— und $\equiv SiOR^1$, wobei bis zu 30 Mol-% der Oxyethylengruppen durch Oxypropylengruppen ersetzt sein können, $R^1$, $R^2$ Alkylreste mit 1 bis 4 Kohlenstoffatomen sind, n eine ganz Zahl $\geq 1$ ist, verwendet.

14. Verfahren nach Anspruch 13, dadurch gekennzeichnet, daß man als siliciumorganische Verbindungen Silane der Formel

$$R^2O(C_2H_4O)_n—R^4—Si(R^3)_{3-a}(OR^1)_a$$

wobei bis zu 30 Mol-% der Oxyethylengruppen durch Oxypropylengruppen ersetzt sein können, a 1, 2 oder 3 ist, $R^3$ ein Alkylrest mit 1 bis 4 Kohlenstoffatomen und $R^4$ ein zweiwertiger Alkylenrest mit 3 bis 6 Kohlenstoffatomen ist, verwendet.

15. Verfahren nach den Ansprüchen 6, 7, 8 und 12, dadurch gekennzeichnet, daß man als hydrophilierendes Modifizierungsmittel Verbindungen der Formel

$$R^2O(C_2H_4O)_nCONHR^5NCO$$

wobei bis zu 30 Mol-% der Oxyethylengruppen durch Oxypropylengruppen ersetzt sein können und $R^5$ ein zweiwertiger Kohlenwasserstoffrest ist, verwendet.

16. Verfahren nach den Ansprüchen 6, 7, 8 und 12, dadurch gekennzeichnet, daß man als

hydrophobierendes Modifizierungsmittel siliciumorganische Verbindungen mit den Struktureinheiten $R^6-$ und $\equiv SiOR^1$, wobei $R^6$ ein Alkylrest mit mehr als 3 Kohlenstoffatomen, ein Aryl- oder Alkarylrest oder ein Polysiloxanylrest ist, verwendet.

17. Verfahren nach Anspruch 16, dadurch gekennzeichnet, daß man als siliciumorganische Verbindungen Silane der Formel

$$R_c^7R_d^2(OR^1)_{4-(c+d)}$$

wobei $R^7$ ein Alkylrest mit mehr als 3 Kohlenstoffatomen, ein Aryl oder Alkarylrest, c = 1 oder 2, d = 0 oder 1, c + d = 1, 2 oder 3 bedeuten, oder Organopolysiloxane mit mindestens einer Gruppe $-OR^1$ verwendet.

18. Verfahren nach den Ansprüchen 6, 7, 8 und 12, dadurch gekennzeichnet, daß man als hydrophobierendes Modifizierungsmittel eine Verbindung der Formel

$$R^7COCl$$

verwendet.

19. Verwendung der anisotrop modifizierten Teilchen nach den vorhergehenden Ansprüchen als grenzflächenaktive Produkte, insbesondere zum Stabilisieren oder Destabilisieren von Emulsionen, Schäumen sowie zur tertiären Erdölförderung.

**Claims**

1. Particles of particle size < 100 µm which are insoluble in organic solvents and water and modified at their surface by means of hydrophilic and hydrophobic groups, characterized in that the hydrophilic and hydrophobic groups are anisotropically distributed over the surface of the modified particles.

2. Particles according to Claim 1, characterized in that they have as hydrophilic groups polyoxyethylene groups, although up to 30 mol-% of the oxyethylene units can be replaced by oxypropylene units.

3. Particles according to Claim 1, characterized in that they have as hydrophobic groups hydrocarbon groups.

4. Particles according to Claim 3, characterized in that they have as hydrocarbon groups alkyl or aryl groups which can each be substituted.

5. Particles according to one or more of the preceding claims, characterized in that the hydrophilic and/or hydrophobic groups are bonded to the particle matrix by a

$$-CO-,\ -SiO-,\ -\overset{O}{\overset{\|}{C}}O-,\ -NH\overset{O}{\overset{\|}{C}}O-\ \text{or}\ -NH\overset{O}{\overset{\|}{C}}-.$$

bridge.

6. Process for preparing particles having an anisotropically modified surface according to one or more of Claims 1 to 5, characterized in that hollow microspheres which have reactive groups on the outer and inner surfaces

a) are hydrophilized (hydrophobized) in a conventional manner,

b) the hollow microspheres which are modified on their outer surface are comminuted to a particle size < 100 µm and

c) the originally inner surface of the resulting particles which is bared by the comminution is hydrophobized (hydrophilized) in a conventional manner.

7. Process according to Claim 6, characterized in that it is carried out with hollow microspheres made of a silicate material, preferably glass.

8. Process for preparing particles having an anisotropically modified surface according to one or more of Claims 1 to 5, characterized in that

a) an aliquot of the particles to be modified is hydrophilized in a conventional manner by partial conversion of the reactive groups present on the surface,

b) an aliquot of the particles to be modified is hydrophobized in a conventional manner by partial conversion of the reactive groups present on the surface,

c) either the modified aliquot obtained in a) or the modified aliquot obtained in b) is reacted with a stoichiometric excess, relative to reactive groups remaining, of a difunctional compound and

d) the particles obtained in c) are coupled with the particles obtained in b) or a) by reaction of the reactive groups.

9. Process according to Claim 8, characterized in that in or immediately after steps a) and b), before step c), the remaining reactive groups are reacted with an at least stoichiometric amount of an at least difunctional compound and the aliquots thus obtained are used together with the reactive groups introduced for steps c) and d).

10. Process according to Claim 8 or 9, characterized in that the difunctional compounds used in step c) are diisocyanates or dicarbonyl chlorides.

11. Process according to Claim 9, characterized in that the difunctional compounds used are aminoalkylalkoxysilanes.

12. Process for preparing particles having an anisotropically modified surface according to one or more of Claims 1 to 5, characterized in that

a) the particles are initially partially hydrophobized in a conventional manner,

b) the particles obtained in a) are added to a mixture of a polar solvent and of an apolar solvent immiscible therewith,

c) the hydrophilizing modifying agent is dissolved in the polar solvent and the hydrophobizing modifying agent is dissolved in the apolar solvent,

d) the reaction conditions required for the modification reaction are set and

e) the modified particles are separated from the solvent mixture.

13. Process according to Claims 6, 7, 8 and 12, characterized in that the hydrophilizing modifying agent used is an organosilicon compound having the structural units $R^2O(C_2H_4O)_n—$ and $\equiv SiOR^1$, where up to 30 mol-% of the oxyethylene groups can be replaced by oxypropylene groups, $R^1$ and $R^2$ are alkyl radicals of 1 to 4 carbon atoms, and n is an integer $\geq 1$.

14. Process according to Claim 13, characterized in that the organosilicon compounds used are silanes of the formula

$$R^2O(C_2H_4O)_n—R^4—Si(R^3)_{3-a}(OR^1)_a$$

where up to 30 mol-% of the oxyethylene groups can be replaced by oxypropylene groups, a is 1, 2 or 3, $R^3$ is an alkyl radical of 1 to 4 carbon atoms and $R^4$ is a divalent alkylene radical of 3 to 6 carbon atoms.

15. Process according to Claims 6, 7, 8 and 12, characterized in that the hydrophilizing modifying agent used is a compound of the formula

$$R^2O(C_2H_4O)_nCONHR^5NCO$$

where up to 30 mol-% of the oxyethylene groups can be replaced by oxypropylene groups and $R^5$ is a divalent hydrocarbon radical.

16. Process according to Claims 6, 7, 8 and 12, characterized in that the hydrophobing modifying agent used is an organosilicon compound having the structural units $R^6—$ and $\equiv SiOR^1$, where $R^6$ is an alkyl radical having more than 3 carbon atoms, an aryl or alkaryl radical or a polysiloxanyl radical.

17. Process according to Claim 16, characterized in that the organosilicon compounds used are silanes of the formula

$$R_c^7R_d^2Si(OR^1)_{4-(c+d)}$$

where $R^7$ denotes an alkyl radical of more than 3 carbon atoms, an aryl or alkaryl radical, c denotes 1 or 2, d denotes 0 or 1, c + d denotes 1, 2 or 3, or organopolysiloxanes having at least one $—OR^1$ group.

18. Process according to Claims 6, 7, 8 and 12, characterized in that the hydrophobing modifying agent used is a compound of the formula

$$R^7COCl.$$

19. Use of the anisotropically modified particles according to the preceding claims, as surface-active products, in particular for stabilizing or destabilizing emulsions, foams and for tertiary petroleum production.

**Revendications**

1. Particules de granulométrie inférieure à 100 µm, insolubles dans l'eau et les solvants organiques, modifiées en surface par des groupes hydrophiles et hydrophobes, caractérisées en ce que les groupes hydrophiles et hydrophobes sont répartis d'une manière anisotrope sur la surface des particules modifiées.

2. Particules selon la revendication 1, caractérisées en ce qu'elles présentent en tant que groupes hydrophiles des groupes polyoxyéthylène, où jusqu'à 30 % en mole des motifs oxyde d'éthylène peuvent être remplacés par des motifs oxyde de propylène.

3. Particules selon la revendication 1, caractérisées en ce qu'elles présentent en tant que groupes hydrophobes des groupes hydrocarbonés.

4. Particules selon la revendication 3, caractérisées en ce qu'elles présentent en tant que groupes hydrocarbonés des groupes alkyle ou aryle, pouvant chacun être substitués.

5. Particules selon une ou plusieurs des revendications ci-dessus, caractérisées en ce que les groupes hydrophiles et/ou hydrophobes sont reliés à la matrice des particules par un pont

$$-CO-,\ -SiO-,\ -\overset{\overset{O}{\|}}{C}O-,\ -NH\overset{\overset{O}{\|}}{C}O-\ \text{ou}\ -NH\overset{\overset{O}{\|}}{C}-.$$

6. Procédé pour la préparation de particules ayant une surface à modification anisotrope selon l'une ou plusieurs des revendications 1 à 5, caractérisé

a) en ce qu'on hydrophilise (hydrophobise) d'une manière connue des microbilles creuses présentant des groupes réactifs se trouvant sur leur surface extérieure et leur surface intérieure,

b) qu'on broie à une granulométrie $< 100\ \mu m$ les microbilles creuses modifiées sur leur surface extérieure, et

c) qu'on hydrophobise (hydrophilise) d'une manière connue en soi la surface intérieure, initialement dégagée par le broyage, des particules obtenues.

7. Procédé selon la revendication 6, caractérisé en ce qu'on le met en œuvre avec des microbilles de verre en un matériau silicaté, de préférence le verre.

8. Procédé pour la préparation de particules ayant une surface à modification anisotrope selon l'une ou plusieurs des revendications 1 à 5, caractérisé

a) en ce qu'on hydrophilise une partie des particules à modifier, d'une manière connue en soi, par réaction partielle des groupes réactifs se trouvant sur la surface,

b) qu'on hydrophobise une partie des particules à modifier, d'une manière connue en soi, par réaction partielle des groupes réactifs se trouvant sur la surface,

c) qu'on fait réagir soit la partie modifiée obtenue selon a), soit celle obtenue selon b), avec un excès stœchiométrique, par rapport aux groupes réactifs restants, d'un composé bifonctionnel, et

d) qu'on couple, par réaction des groupes réactifs, les particules obtenues selon c) avec les particules obtenues selon b) ou a).

9. Procédé selon la revendication 8, caractérisé en ce qu'on fait réagir, à l'occasion des étapes partielles a) et b), ou immédiatement après elles, avant l'étape c), les groupes réactifs restants sur une quantité au moins stoechiométrique d'un composé au moins bifonctionnel, et qu'on utilise les quantités partielles ainsi obtenues, avec les groupes réactifs introduits, pour les étapes c) et d).

10. Procédé selon la revendication 8 ou 9, caractérisé en ce qu'on utilise dans l'étape c), en tant que composés bifonctionnels, des diisocyanates ou des chlorures d'acides dicarboxyliques.

11. Procédé selon la revendication 9, caractérisé en ce qu'on utilise en tant que composés bifonctionnels des aminoalkylalcoxysilanes.

12. Procédé pour la préparation de particules à surface à modification anisotrope selon l'une ou plusieurs des revendications 1 à 5, caractérisé

a) en ce qu'on procède d'abord à une hydrophobisation partielle des particules, d'une manière connue en soi,

b) qu'on ajoute les particules obtenues selon a) à un mélange d'un solvant polaire et d'un solvant non-polaire, non miscible avec ce dernier,

c) qu'on dissout dans le solvant polaire l'agent modifiant hydrophilisant et dans le solvant non-polaire l'agent modifiant hydrophobisant,

d) qu'on ajuste les conditions de réaction nécessaires à la réaction de modification, et

e) qu'on sépare du mélange de solvants les particules modifiées.

13. Procédé selon les revendications 6, 7, 8 et 12, caractérisé en ce qu'on utilise en tant qu'agent modifiant hydrophilisant des composés organosiliciques possédant les motifs structuraux $R^2O(C_2H_4O)_n—$ et $\equiv SiOR^1$, où jusqu'à 30 % en moles des groupes oxyde d'éthylène peuvent être remplacés par des groupes oxyde de propylène, $R^1$, $R^2$ sont chacun des radicaux alkyle ayant de 1 à 4 atomes de carbone, et n est un nombre entier $\geq 1$.

14. Procédé selon la revendication 13, caractérisé en ce qu'on utilise en tant que composés organosiliciques des silanes de formule

$$R^2O(C_2H_4O)_n—R^4—Si(R^3)_{3-a}(OR^1)_a$$

dans laquelle jusqu'à 30 % en moles des groupes oxyde d'éthylène peuvent être remplacés par des groupes oxyde de propylène, a vaut 1, 2 ou 3, $R^3$ est un radical alkyle ayant de 1 à 4 atomes de carbone, et $R^4$ est un radical alkylène bivalent ayant de 3 à 6 atomes de carbone.

15. Procédé selon les revendications 6, 7, 8 et 12, caractérisé en ce qu'on utilise en tant qu'agents modifiants hydrophilisants des composés de formule

$$R^2O(C_2H_4O)_nCONHR^5NCO$$

dans laquelle jusqu'à 30 % en moles des groupes oxyde d'éthylène peuvent être remplacés par des groupes oxyde de propylène, et $R^5$ est un radical hydrocarboné bivalent.

16. Procédé selon les revendications 6, 7, 8 et 12, caractérisé en ce qu'on utilise en tant qu'agents modifiants hydrophobisants des composés organosiliciques possédant des motifs structuraux $R^6—$ et

$\equiv SiOR^1$, où $R^6$ est un radical alkyle ayant plus de 3 atomes de carbone, un radical aryle ou alcaryle, ou un radical polysiloxanyle.

17. Procédé selon la revendication 16, caractérisé en ce qu'on utilise comme composés organosiliciques des silanes de formule

$$R_c^7R_d^2Si(OR^1)_{4-(c+d)}$$

dans laquelle R est un radical alkyle ayant plus de 3 atomes de carbone, un radical aryle ou alcaryle, c = 1 ou 2, d = 0 ou 1, c + d = 1, 2 ou 3, ou bien des organopolysiloxanes possédant au moins un groupe $-OR^1$.

18. Procédé selon les revendications 6, 7, 8, 12, caractérisé en ce qu'on utilise comme agent modifiant hydrophobisant un composé de formule

$$R^7COCl$$

19. Utilisation des particules à modification anisotrope selon les revendications précédentes en tant que produits à activité interfaciale, en particulier pour la stabilisation ou la déstabilisation d'émulsions, de mousses, ainsi que pour la récupération tertiaire du pétrole.